(19)

**Europäisches Patentamt**

**European Patent Office**

**Office européen des brevets**

(11) **EP 3 362 256 B1**

(12) **EUROPEAN PATENT SPECIFICATION**

(45) Date of publication and mention
of the grant of the patent:
**15.09.2021 Bulletin 2021/37**

(21) Application number: **15906391.6**

(22) Date of filing: **16.10.2015**

(51) Int Cl.:
**B29C 64/255** *(2017.01)* **B29C 64/314** *(2017.01)*
**B29C 64/295** *(2017.01)* **B22F 3/105** *(2006.01)*
**B33Y 40/00** *(2020.01)* **B22F 1/00** *(2006.01)*
**B22F 10/20** *(2021.01)* **B22F 12/00** *(2021.01)*

(86) International application number:
**PCT/US2015/055892**

(87) International publication number:
**WO 2017/065796 (20.04.2017 Gazette 2017/16)**

(54) **BUILD MATERIAL SUPPLY FOR ADDITIVE MANUFACTURING**

BAUMATERIALZUFÜHRUNG ZUR GENERATIVEN FERTIGUNG

ALIMENTATION EN MATÉRIAU DE CONSTRUCTION POUR FABRICATION ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.08.2018 Bulletin 2018/34**

(73) Proprietor: **Hewlett-Packard Development Company, L.P.**
**Spring TX 77389 (US)**

(72) Inventors:
• **BRANHAM, Bradley, B**
**Vancouver, WA 98683 (US)**
• **DRIGGERS, Matt, G**
**Vancouver, WA 98683 (US)**

• **WINTERS, William**
**Vancouver, WA 98683 (US)**
• **HERNANDEZ, Anna**
**Vancouver, WA 98683 (US)**
• **KANIA, Ken**
**Vancouver, WA 98683 (US)**

(74) Representative: **EIP**
**Fairfax House**
**15 Fulwood Place**
**London WC1V 6HU (GB)**

(56) References cited:
**WO-A1-2004/028769     WO-A1-2013/167194**
**WO-A1-2015/152875     WO-A1-2015/155745**
**JP-A- H05 186 864     KR-A- 20110 112 600**
**US-A1- 2014 169 123**

**Description**

BACKGROUND

Additive manufacturing machines produce 3D (three-dimensional) objects by building up layers of material. Some additive manufacturing machines are commonly referred to as "3D printers." 3D printers and other additive manufacturing machines make it possible to convert a CAD (computer aided design) model or other digital representation of an object directly into the physical object. The model data is processed into slices each defining that part of a layer or layers of build material to be formed into the object.

WO2013/167194 describes an additive manufacturing method and apparatus including a rotatable powder container for providing powder to a powder table. WO2004/028769 describes a rotatable device for supplying loose material for the production of ceramic tiles.

DRAWINGS

Fig. 1 is a block diagram illustrating an additive manufacturing machine implementing one example of a new build material supply drum.

Fig. 2 is an isometric illustrating one example of a supply drum dispensing powdered build material to a work area.

Figs. 3-11 are sections illustrating one example for supplying de-agglomerated and preheated build material using a supply drum such as might be used in the machine of Fig. 1.

Fig. 12 is a flow diagram illustrating one example of a process to supply build material for additive manufacturing, such as might be implemented with the supply drum shown in Figs. 3-11.

Figs. 13-21 are sections illustrating one example for manufacturing an object using a supply drum such as that shown in Figs. 3-11.

Fig. 22 illustrates one example of an additive manufacturing process 210, such as might be implemented in the sequences shown in Figs. 4-11 and 13-21 Fig. 23 is a block diagram illustrating one example of a processor readable medium with instructions to de-agglomerate powdered build material during additive manufacturing.

Fig. 24 is a block diagram illustrating one example of an additive manufacturing machine implementing a controller having a processor readable medium with instructions to de-agglomerate powdered build material during additive manufacturing.

The same part numbers designate the same or similar parts throughout the figures. The figures are not necessarily to scale.

DESCRIPTION

In some additive manufacturing processes, heat is used to fuse together the particles in a powdered build material to form a solid object. Heat to fuse the build material may be generated, for example, by applying a liquid fusing agent to a thin layer of build material in the pattern of the object slice and then exposing the patterned area to light. Light absorbing components in the fusing agent absorb energy to help sinter, melt or otherwise fuse the build material. Build material may be preheated (before patterning) to facilitate fusing.

The particles in powdered build materials tend to agglomerate. Agglomerates are undesirable in additive manufacturing build materialsagglomerated build materials are difficult to dispense with precision and agglomerates can create inhomogeneous void fractions which result in anisotropic density gradients within the individual layers of build material. These density gradients limit control of the capillary forces that draw the fusing agents into the build material, thus increasing the risk of poor quality fusing.

A new technique has been developed for supplying powdered build material in an additive manufacturing machine to help minimize the risk of agglomerates being dispensed to the work area. In one example of the new technique, a supply container is rotated under conditions that cause a cataracting flow of powdered build material inside the container to break down agglomerates. The powder inside the container may be heated to the desired pre-fusion temperature as it flows so that preheated, de-agglomerated powder can be dispensed from the container to the work area for fusing. Powder particles at the surface of the bulk and those falling through hot air trapped inside the container heat rapidly and are continually mixed into the bulk through the cataracting flows in the build material induced by the rotating container. Thus, heating the build material as it flows helps more efficiently maintain a pre-heated supply of homogeneous build material powder.

These and other examples described below and shown in the figures illustrate but do not limit the scope of the patent, which is defined in the Claims following this Description. The invention concerns a build material supply for an additive manufacturing apparatus according to the appended Claim 1, a non-transitory processor readable medium according to the appended claim 5 and an additive manufacturing process according to the appended Claim 8.

As used in this document, a "cataracting" flow means a flow in which the fill fraction is greater than 0.2 (f > 0.2) and the Froude number is greater than 0.1 and less than 1.0 ($0.1 < F_r < 1.0$); a "fusing agent" means a substance that causes or helps cause a powdered build material to sinter, melt or otherwise fuse; a "detailing agent" means a substance that inhibits or prevents or enhances fusing a build material, for example by modifying the effect of a fusing agent; and "energy" means electromagnetic radiation of any wavelength.

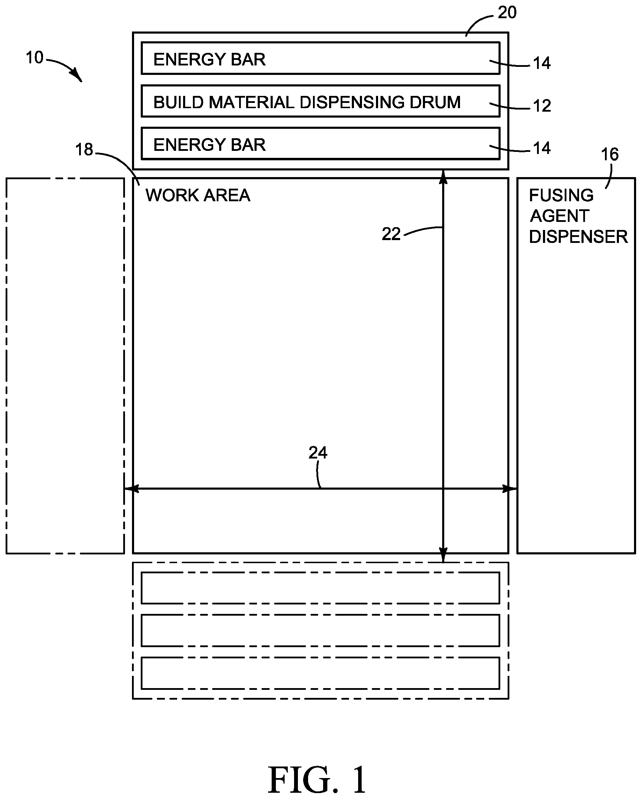

Fig. 1 is a block diagram illustrating an additive manufacturing machine 10 implementing one example of a new build material supply drum 12. The block diagram of Fig. 1 shows one example for the layout of a machine 10 implementing drum 12. Other layouts are possible. Referring to Fig. 1, machine 10 includes build material supply drum 12, energy bars 14, and a fusing agent dispenser 16 located near a work area 18. Work area 18 in the figures represents generally any suitable platform, powder bed or other structure to support or hold build material 26 for fusing. In this example, build material supply drum 12 is mounted together with a pair of light bars 14 on a movable carriage 20. Carriage 20 carries drum 12 and energy bars 14 back and forth over work area 18, as indicated by direction arrows 22. Fusing agent dispenser 16 is also movable back and forth over work area 18, as indicated by direction arrows 24. Alternate "parking" positions for dispenser 16 and carriage 20 across work area 18 are depicted by phantom lines in Fig. 1.

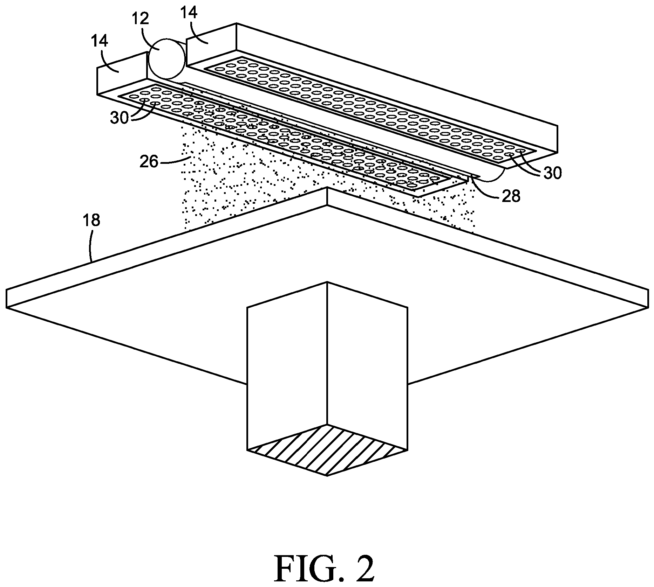

Fig. 2 is an isometric showing a supply drum 12 and energy bars 14 over a work area 18. Referring now also to Fig. 2, in operation de-agglomerated build material is dispensed from drum 12 on to work area 18 as carriage 20 (carrying drum 12) is scanned over work area 18. In the example shown in Fig. 2, build material 26 is dispensed from an axial slot 28 in drum 12 on to work area 18. (The spacing between drum 12 and work area 18 is greatly exaggerated in Fig. 2 so that slot 28 is visible from this view angle.) A liquid fusing agent is selectively applied to build material on work area 18 in a pattern corresponding to an object slice as dispenser 16 is scanned across work area 18. One or both energy bars 14 are energized to expose the patterned area to light or other electromagnetic radiation to fuse the build material where fusing agent is applied into the object slice as carriage 20 (carrying bars 14) is scanned over work area 18. In the example shown in Fig. 2, each energy bar is configured as an array of LEDs, laser diodes or other light sources 30 that span work area 18. The process of dispensing, applying and lighting may be repeated for multiple layers to manufacture a multi-slice object.

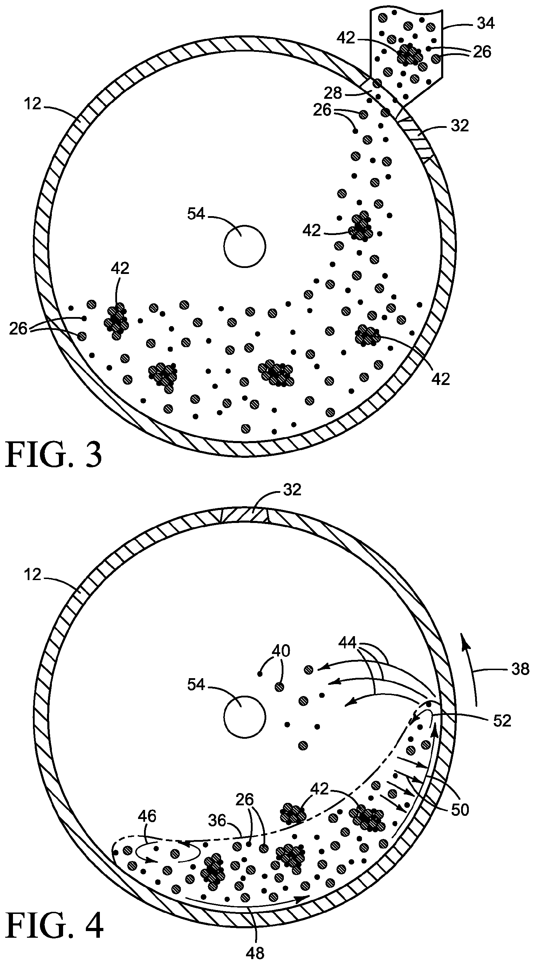

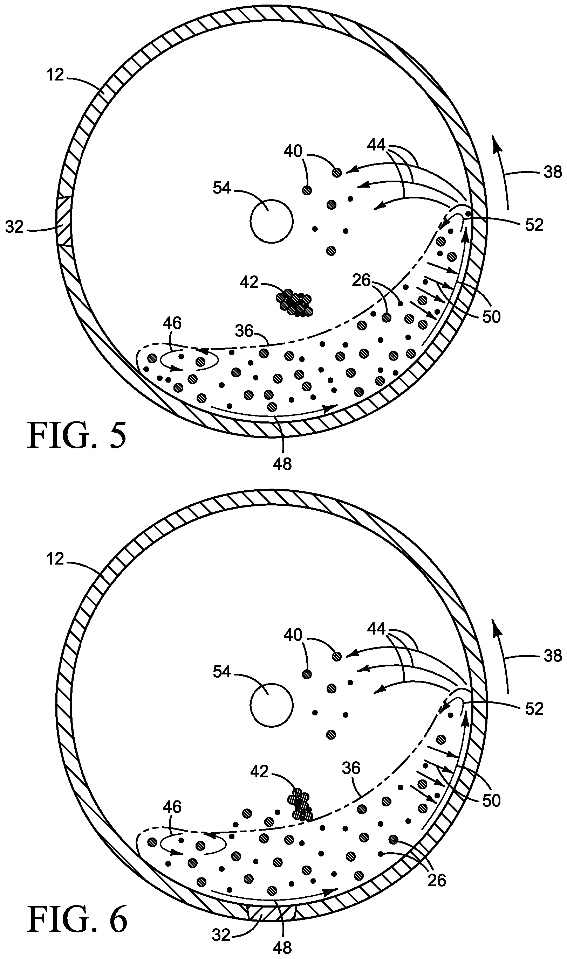

Figs. 3-11 are sections illustrating one example for supplying de-agglomerated and pre-heated build material using a supply drum such as might be used in the machine of Fig. 1. Referring first to Fig. 3, a build material supply drum 12 includes a valve 32 that may be opened to load or dispense build material 26 and closed to contain build material 26 in a cylindrical drum 12. In Fig. 3, drum 12 is stationary as powdered build material 26 is loaded from a hopper 34 into drum 12 through an open valve 32. In Fig. 4, valve 32 is closed and drum 12 with a supply 36 of build material 26 is rotated, as indicated by direction arrow 38. Supply 36 refers to the bulk of build material 26 in drum 12 and includes individual particles 40 and any agglomerates 42 still in the build material. Drum 12 is rotated under conditions sufficient to cause the cataracting flow of build material shown in Fig. 4. For a cylindrical container such as supply drum 12, the Froude number is determined according to the equation

$$F_r = \frac{R_{cylinder}\omega^2}{g}$$

where $R_{cylinder}$ is the radius of the cylinder, $\omega$ is the rotational velocity of the container, and g is the acceleration due to gravity.

While the characteristics of a cataracting flow of powdered build material 26 inside drum 26 may not be known precisely, it is believed that such flow exhibits multiple components, including airborne particles 40, indicated by flow arrows 44, a "fluidized" surface flow 46, a "slug" flow 48 along the bottom drum 12, a "segregation" flow 50 into and up the side of drum 12, and a "gravitational recirculation" flow 52 at the top of the build material supply 36. In a cataracting flow of build material 26 in drum 12, gravity is stronger than centripetal forces so that none of the build material particles 40 are carried full around drum 12. Some particles are thrown into the air and some recirculated to the bottom of the drum within the bulk 36. Airborne particles mix back into the fluidized surface flow 46 where shear mixes particles on top of the non-shearing slug flow 48. Centripetal forces developed in slug flow 48 draw smaller particles to the wall of the drum, creating a density gradient between particles at the surface and particles at the wall. This density gradient induces a segregation flow 50 of less dense agglomerates 42 toward the surface of the supply 36 where they are ejected from the bulk. Surface flow and compacted smaller particles inhibit the reabsorption of ejected agglomerates back into the bulk. Agglomerates 42 tumble, spin and bounce along the surface of the bulk, dislodging individual particles until the build material is substantially free of agglomerates, as suggested by the sequence of Figs. 4-6. The degree of compaction increases at higher Froude numbers within the cataracting flow regime as the particles of powdered build material are compressed under increasing centripetal forces. A more compact bulk presents a harder surface that may help disintegrate the agglomerates more efficiently compared to cataracting flows at lower Froude numbers.

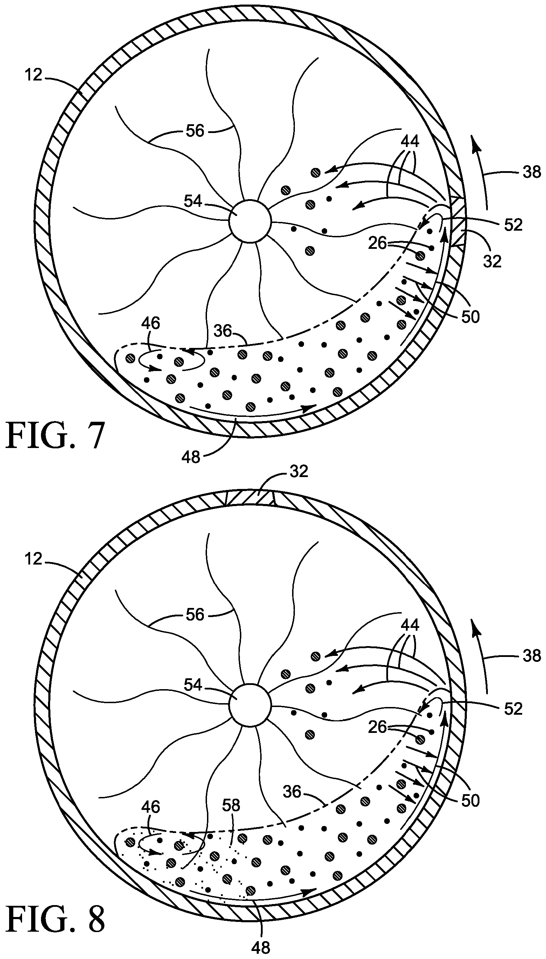

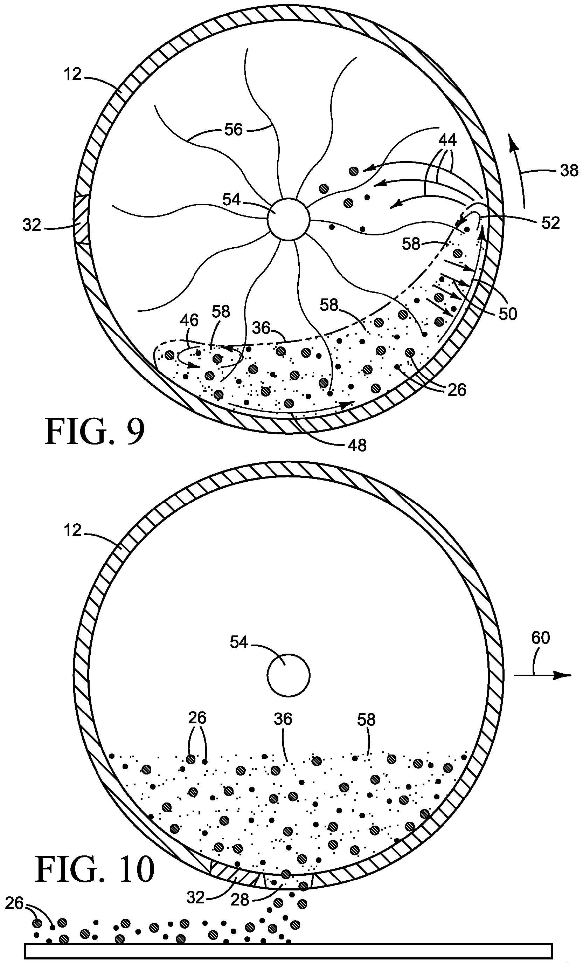

Referring now to Figs. 7-9, in this example, supply drum 12 also includes a heater 54 to heat build material 26. Heater 54 represents generally any suitable heating device and may include, for example, a radiative or microwave heating element. In the example shown, a radiative heating element 54 is located axially along the center of drum 12. Heat radiating from element 54 is depicted by lines 56 in Figs. 7-9. The characteristics of the cataracting flow of build material 26 inside drum 12 help efficiently develop and maintain a pre-heated supply 36 -- when heater 54 is energized, surface flow 46 and recirculation flow 52 mix heated surface particles into supply 36. Airborne particles 40 also carry heat into the surface flow 46. Stippling 58 in Figs. 8 and 9 depict heating in build material supply 36 progressing from the region near flow 46 in Fig. 8 to the full bulk in Fig. 9. Continued rotation of drum 12 during pre-heating inhibits re-agglomeration of the build material.

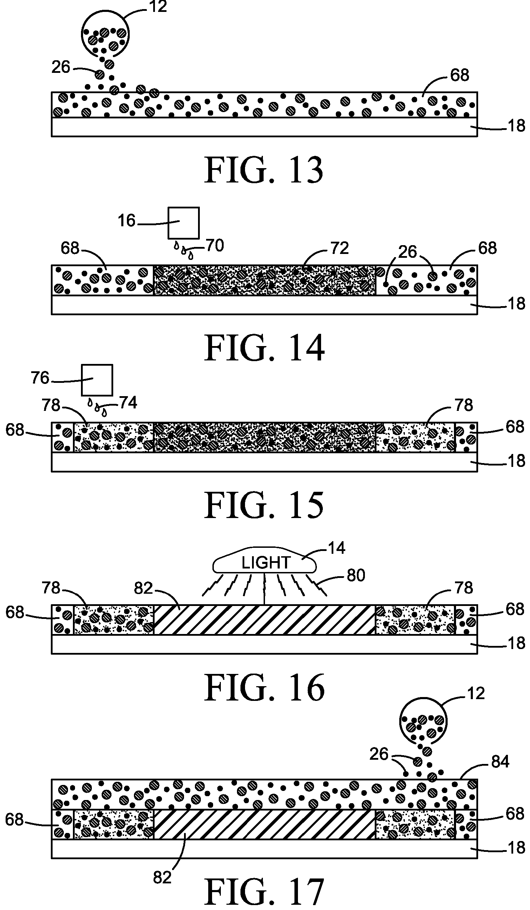

The pre-heating temperature may vary depending on the characteristics of the build material and the fusing agent, as well as other process parameters. In one example, for a fusing process such as that described below with reference to Figs. 13-21, the pre-heating temperature may be 5°C to 50°C below the fusing point of the build material. A thermostat or other suitable temperature control device may be used to maintain build material supply 36 at the desired temperature.

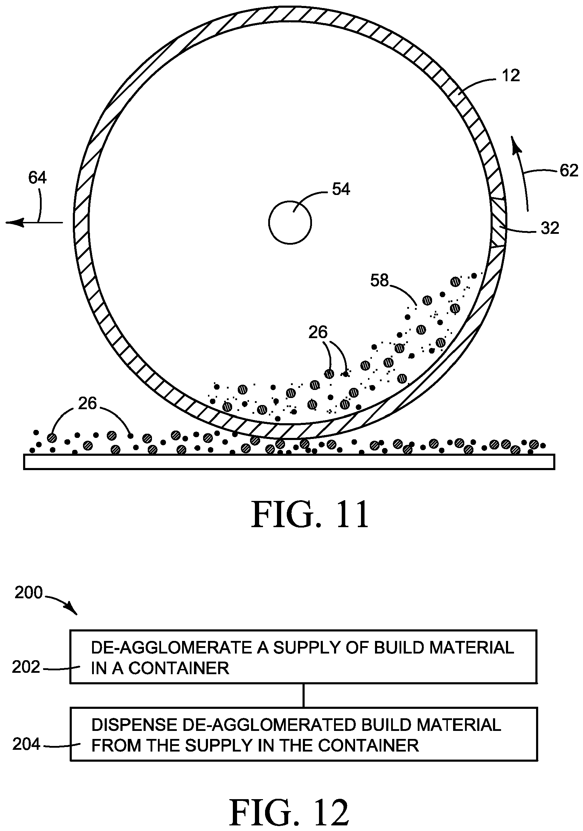

De-agglomerated, pre-heated build material 18 may be dispensed from supply drum 12, for example as shown in Fig. 10. Referring to Fig. 10, drum 12 is rotated to a position from which build material 26 may be dispensed through slot 28. Slot 28 is shown vertically straight down (at six o'clock) in this example. Valve 32 may be opened as drum 12 is scanned across work area 18, as indicated by arrow 60 in Fig. 10, to dispense a layer of build material 26 or drum 12 may be stationary over work area 18 to dispense a pile of build material 26. Drum 12 may be rotated back and forth (up to the angle of repose of supply 36) over work area 18 to facilitate dispensing build material 18 through slot 28. For example, it may be desirable for some powdered build materials 26 and/or some geometries of slot 28 to rock drum 12 back and forth to keep build material 26 moving inside drum 12, helping build material flow continuously and uniformly through slot 28. Also, as shown in Fig. 11, drum 12 may be used to distribute and compress build material 26 on work area 18 by rolling drum 12 over the build material, as indicated by rotation arrow 62, and/or by dragging drum 12 over the build material, as indicated by translation arrow 64.

Fig. 12 is a flow diagram illustrating one example process 200 to supply build material for additive manufacturing, such as might be implemented with supply drum 12 shown in Figs. 3-11. Referring to Fig. 12, a supply of build material in a cylindrical or other container is de-agglomerated at block 202, for example by cataracting a supply 36 of build material 26 in drum 12 as shown in Figs. 4-6. Then de-agglomerated build material is dispensed from the container to an additive manufacturing work area at block 204, for example by dispensing build material 26 from slot 28 in drum 12 as shown in Fig. 10.

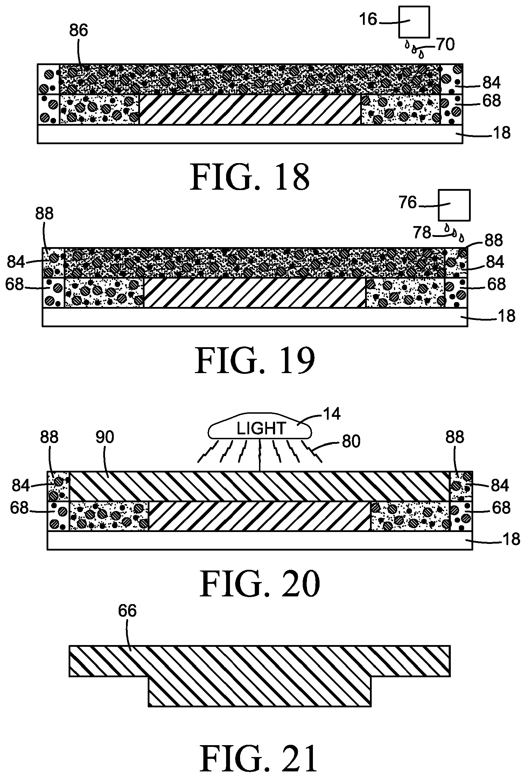

Referring now to the sequence of sections presented in Figs. 13-21 which illustrate one example for manufacturing an object 66 (shown in Fig. 21) using a supply drum 12 such as the drum 12 shown in Figs. 3-11. A first layer 68 of de-agglomerated build material 26 is dispensed on to work area 18 from drum 12 in Fig. 13. Although Fig. 13 shows build material 26 dispensed from supply drum 12 in a layer 68, other layering processes are possible. For another example, build material 26 could be dispensed from drum 12 in a pile and then spread into a layer 68 using drum 12, as described above, or with a discrete blade or roller. Build material 26 may be pre-heated in drum 12, if desired, for example as described above with reference to Figs. 7-9. "Pre-heating" in this context refers to heating before fusing energy is applied.

In Fig. 14, a fusing agent 70 is dispensed on to build material 26 in layer 68 in a pattern 72 corresponding to a first object slice, for example with an inkjet type dispenser 16. Pattern 72 for fusing agent 70 is depicted by an area of dense stippling in the figures. In some examples, a detailing agent 74 may be dispensed on to build material 26 in layer 68, for example with an inkjet type dispenser 76, as shown in Fig. 15. Detailing agent 74 may be applied before and/or after fusing agent 70 to inhibit or prevent or enhance fusing targeted areas of build material 26 for improved dimensional accuracy and overall quality of the manufactured object. In the example shown in Fig. 15, detailing agent 74 is dispensed on to an area 78 covering the area where a second object slice will overhang the first slice. Area 78 treated with detailing agent 74 is depicted by light stippling in the figures. Detailing agent 74 may be dispensed on to other areas of build material layer 68 to help define other aspects of the object slice, including interspersed with the pattern of fusing agent for example to change the material characteristics of the slice.

Although two dispensers 16 and 76 are shown, agents 70 and 74 could be dispensed from dispensers integrated into a single device, for example using different printheads (or groups of printheads) in a single inkjet printhead assembly. In this example, fusing agent 70 includes a light absorbing component to absorb light to generate heat that sinters, melts or otherwise fuses patterned build material 26. Thus, in Fig. 16 the area of layer 68 patterned with fusing agent 70 is exposed to light 80 from a light bar 14 to fuse build material and form first object slice 82.

In Fig. 17, a second layer 84 of build material 26 is dispensed from drum 12 over first layer 68. In Fig. 18, fusing agent 70 is dispensed on to build material 14 in layer 84 in a pattern 86 corresponding to a second object slice. In Fig. 19, detailing agent 74 is dispensed on to build material 26 in layer 84 in area 88 to help prevent unwanted fusing of build material along the edge of the second slice. In Fig. 20, the area 86 of layer 84 patterned with fusing agent 70 is exposed to light 80 to fuse build material and form second object slice 90. While distinct first and second slices 82, 90 are shown in Fig. 20, the two slices actually fuse together into a single part. The now fused slices 82, 90 may be removed from work area 18 as a finished object 66 shown in Fig. 21. Although a simple two-slice object 66 is shown, the same processes may be used to form more complex, multi-slice objects.

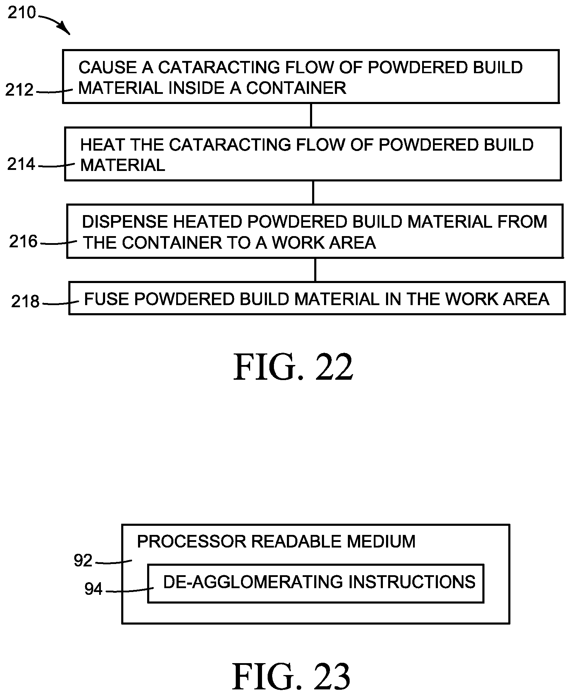

Fig. 22 illustrates one example of an additive manufacturing process 210, such as might be implemented in the sequences shown in Figs. 4-11 and 13-21. Referring to Fig. 22, at block 212 a cataracting flow of powdered build material is caused inside a container, for example build material 26 in a rotating drum 12 shown in Figs. 4-6. The cataracting flow of build material is heated at block 214, for example with a radiative heating element 54 in drum 12 as shown in Figs. 7-9, and then heated powdered build material is dispensed to a work area in block 216, for example build material 26 dispensed from slot 28 in drum 12 as shown in Fig. 10. Powered build material is fused in the work area at block 218, for example to form an object slice 82 as shown in Figs. 13-16.

Fig. 23 is a block diagram illustrating a processor readable medium 92 with instructions 94 to de-agglomerate powdered build material during the additive manufacture of a 3D object, for example by causing a cataracting flow of powdered build material inside a supply container at block 212 in Fig. 22. De-agglomerating instructions 94 may also include instructions for pre-heating and dispensing powdered build material to a work area, for example by heating the cataracting flow of build material and dispensing the heated powdered build material to a work area at blocks 214 and 216 in Fig. 22. A processor readable medium 92 in Fig. 23 is any non-transitory tangible medium that can embody, contain, store, or maintain instructions for use by a processor, and may include for example a hard drive, a random access memory (RAM), a read-only memory (ROM), memory cards and sticks and other portable storage devices. Processor readable medium 92 with instructions 94 may be implemented, for example, in a CAD computer program product, in an object model processor, or in a controller for an additive manufacturing machine.

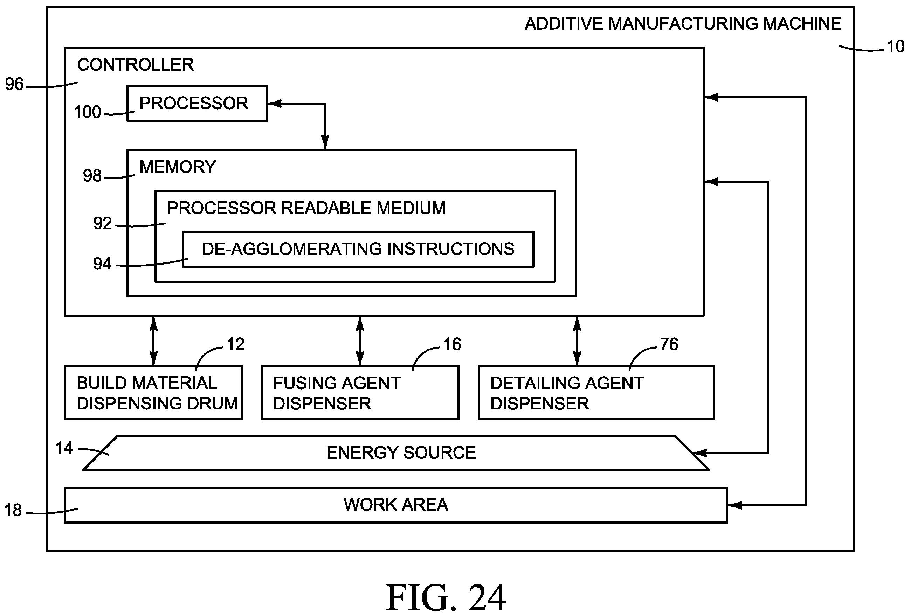

Fig. 24 is a block diagram illustrating one example of an additive manufacturing machine 10 implementing a controller 96 with de-agglomerating instructions 94. Referring to Fig. 24, machine 10 includes controller 96, a work area 18, a build material supply drum 12, a fusing agent dispenser 16, a detailing agent dispenser 76, and an energy source 14. Controller 96 represents the processor (or multiple processors), the associated memory (or multiple memories) and instructions, and the electronic circuitry and components needed to control the operative elements of machine 10. In particular, controller 96 includes a memory 98 having a processor readable medium 92 with de-agglomerating instructions 94, and a processor 100 to read and execute instructions 94. For example, controller 96 would receive control data and other instructions generated by a CAD program to make an object and execute de-agglomerating instructions 94 as part of the process of making the object. Powdered build material may be de-agglomerated and pre-heated (if desired) in drum 12 as described above with reference to Figs. 3-10.

Any suitable powdered build material may be used, including for example metals, composites, ceramics, glass and polymers, and processed to make the desired solid object which may be hard or soft, rigid or flexible, elastic or inelastic. Suitable build materials for an additive manufacturing process such as that shown in Figs. 13-21 may include, for example, polyamides and other thermoplastics. A build material may also include a charging agent to suppress or otherwise modify charge characteristics and/or a flow aid to improve flowability.

Energy source 14 supplies light or other electromagnetic radiation to help fuse build material patterned with a fusing agent. Energy source 14 may be implemented, for example, as an infra-red (IR) or near infra-red light source, a halogen light source, or a light emitting diode. A light source 14 may be a single light source or an array of multiple light sources configured to apply light energy in a substantially uniform manner simultaneously to the whole area of a layer of build material or to apply light energy to just select areas of a layer of build material.

Suitable fusing agents may include pigments, dyes, polymers and other substances that have significant light or other energy absorption. Carbon black ink and light absorbing color inks commercially known as CM997A, CE039A and CE042A available from Hewlett-Packard Company may be suitable fusing agents with the appropriate light source.

Suitable detailing agents may separate individual particles of the build material to prevent the particles from fusing. Examples of this type of detailing agent include colloidal, dye-based, and polymer-based inks, as well as solid particles that have an average size less than the average size of particles of the build material. In one example, a salt solution may be used as a detailing agent. In other examples, inks commercially known as CM996A and CN673A available from Hewlett-Packard Company may be used as a detailing agent. Suitable detailing agents may act to modify the effects of a fusing agent by preventing build material from reaching temperatures above its fusing point. A fluid that exhibits a suitable cooling effect may be used as this type of detailing agent. For example, when build material is treated with a cooling liquid, energy applied to the build material may be absorbed evaporating the liquid to help prevent build material from reaching its fusing point. Thus, for example, a fluid with a high water content may be a suitable detailing agent. Other types of detailing agent may be used. Examples of a detailing agent to enhance fusing may include plasticizers and surface tension modifiers (that increase the wettability of particles of build material).

The examples shown in the figures and described above illustrate but do not limit the patent, which is defined in the following Claims.

**Claims**

1. A build material supply for an additive manufacturing machine, comprising a container to de-agglomerate a supply of powdered build material (26); where the container to de-agglomerate a supply of powdered build material comprises a rotatable container (12) and the supply includes a controller (96) to rotate the container to cause a cataracting flow of powdered build material inside the container.

2. The supply of Claim 1, where the container comprises a cylindrical drum having a slot (28)extending lengthwise along the drum through which de-agglomerated powdered build material may be dispensed from the drum and a valve (32) to open and close the slot.

3. The supply of Claim 2, comprising a heater (54) inside the drum.

4. The supply of Claim 3, comprising powdered build material in the drum.

5. A non-transitory processor readable medium including instructions thereon that when executed on a controller (96) of the build material supply of Claim 1 cause the controller to rotate the container (12) to de-agglomerate a supply of powdered build material (26) in the container by causing a cateracting flow of the powdered build material to dispense de-agglomerated powdered build material from the supply to a work area (18).

6. The processor readable medium of Claim 5, including instructions to heat the supply of de-agglomerated powdered build material and dispense heated de-agglomerated powdered build material from the supply to a work area.

7. An additive manufacturing machine controller that includes the processor readable medium of Claim 5.

8. An additive manufacturing process, comprising:

    causing a cataracting flow of powdered build material inside a container (212); heating the cataracting flow of powdered build material (214); dispensing heated powdered build material from the container to a work area (216); and then fusing powdered build material in the work area (218); where the container is a cylindrical container and the causing includes rotating the container.

9. The process of Claim 8, where the container is an elongated container and the dispensing includes dispensing heated powdered build material through a lengthwise slot in the container.

10. The process of Claim 9, comprising compressing build material in the work area with the container.

11. The process of Claim 9, where the comprising rolling and/or dragging the container over build material in the work area.

12. The process of Claim 8, comprising trapping air in the container and the heating includes heating air trapped in the container.

13. The process of Claim 8, where the fusing includes fusing powdered build material in the work area to form a slice and the process comprises repeating the dispensing and fusing successively to form multiple slices.

**Patentansprüche**

1. Baumaterialzufuhr für eine additive Fertigungsmaschine, die einen Behälter umfasst, um eine Zufuhr von pulverförmigem Baumaterial (26) zu desagglomerieren; wobei der Behälter, um eine Zufuhr von pulverförmigem Baumaterial zu desagglomerieren, einen drehbaren Behälter (12) umfasst und die Zufuhr eine Steuerung (96) beinhaltet, um den Behälter zu drehen, um einen kataraktischen Fluss von pulverförmigem Baumaterial innerhalb des Behälters zu veranlassen.

2. Zufuhr nach Anspruch 1, wobei der Behälter eine zylindrische Trommel, die einen Schlitz (28) aufweist, der sich in Längsrichtung entlang der Trommel erstreckt, durch den desagglomeriertes pulverförmiges Baumaterial aus der Trommel abgegeben werden kann, und ein Ventil (32) umfasst, um den Schlitz zu öffnen und zu schließen.

3. Zufuhr nach Anspruch 2, die eine Heizvorrichtung (54) innerhalb der Trommel umfasst.

4. Zufuhr nach Anspruch 3, die pulverförmiges Baumaterial in der Trommel umfasst.

5. Nichtflüchtiges prozessorlesbares Medium, das Anweisungen darauf beinhaltet, die, wenn sie auf einer Steuerung (96) der Baumaterialzufuhr nach Anspruch 1 ausgeführt werden, die Steuerung veranlassen, den Behälter (12) zu drehen, um eine Zufuhr von pulverförmigem Baumaterial (26) in dem Behälter durch Veranlassen eines kataraktischen Flusses des pulverförmigen Baumaterials, desagglomeriertes pulverförmiges Baumaterial aus der Zufuhr zu einem Arbeitsbereich (18) abzugeben, zu desagglomerieren.

6. Prozessorlesbares Medium nach Anspruch 5, das Anweisungen beinhaltet, die Zufuhr von desagglomeriertem pulverförmigem Baumaterial zu erhitzen und erhitztes desagglomeriertes pulverförmiges Baumaterial aus der Zufuhr zu einem Arbeitsbereich abzugeben.

7. Steuerung für die additive Fertigungsmaschine, die das prozessorlesbare Medium nach Anspruch 5 beinhaltet.

8. Additives Fertigungsverfahren, das Folgendes umfasst:

Veranlassen eines kataraktischen Flusses von pulverförmigem Baumaterial innerhalb eines Behälters (212);
Erhitzen des kataraktischen Flusses von pulverförmigem Baumaterial (214);
Abgeben von erhitztem pulverförmigem Baumaterial aus dem Behälter zu einem Arbeitsbereich (216); und
dann Schmelzen von pulverförmigem Baumaterial in dem Arbeitsbereich (218);
wobei der Behälter ein zylindrischer Behälter ist und das Veranlassen ein Drehen des Behälters beinhaltet.

9. Verfahren nach Anspruch 8, wobei der Behälter ein länglicher Behälter ist und das Abgeben das Abgeben von erhitztem pulverförmigem Baumaterial durch einen Längsschlitz in dem Behälter beinhaltet.

10. Verfahren nach Anspruch 9, das ein Komprimieren von Baumaterial in dem Arbeitsbereich mit dem Behälter umfasst.

11. Verfahren nach Anspruch 9, wobei das Verfahren ein Rollen und/oder Ziehen des Behälters über Baumaterial in dem Arbeitsbereich umfasst.

12. Verfahren nach Anspruch 8, das ein Einschließen von Luft in dem Behälter umfasst, und wobei das Erhitzen das Erhitzen der in dem Behälter eingeschlossenen Luft beinhaltet.

13. Verfahren nach Anspruch 8, wobei das Schmelzen das Schmelzen von pulverförmigem Baumaterial in dem Arbeitsbereich beinhaltet, um eine Scheibe auszubilden, und das Verfahren ein Wiederholen des Ausgebens und des Schmelzens nacheinander umfasst, um mehrere Scheiben auszubilden.

**Revendications**

1. Alimentation en matériau de construction pour une machine de fabrication additive, comprenant un récipient pour désagréger une alimentation en matériau de construction en poudre (26) ;
où le récipient destiné à désagréger une alimentation en matériau de construction en poudre comprend un récipient rotatif (12) et l'alimentation comporte un dispositif de commande (96) pour faire tourner le récipient afin de provoquer un écoulement de cataracte de matériau de construction en poudre à l'intérieur du récipient.

2. Alimentation selon la revendication 1, dans laquelle le récipient comprend un tambour cylindrique ayant une fente (28) s'étendant dans la direction de la longueur le long du tambour à travers laquelle un matériau de construction en poudre désagrégé peut être distribué à partir du tambour et une valve (32) pour ouvrir et fermer la fente.

3. Alimentation selon la revendication 2, comprenant un élément chauffant (54) à l'intérieur du tambour.

4. Alimentation selon la revendication 3, comprenant un matériau de construction en poudre dans le tambour.

5. Support lisible par processeur non transitoire comportant des instructions sur celui-ci qui, lorsqu'elles sont exécutées sur un dispositif de commande (96) de l'alimentation en matériau de construction selon la revendication 1, amènent le dispositif de commande à faire tourner le récipient (12) pour désagréger une alimentation de matériau de construction en poudre (26) dans le récipient en amenant un écoulement de cataracte du matériau de construction en poudre pour distribuer le matériau de construction en poudre désagrégé de l'alimentation vers une zone de travail (18).

6. Support lisible par processeur selon la revendication 5, comportant des instructions pour chauffer l'alimentation du matériau de construction en poudre désagrégé et distribuer le matériau de construction en poudre désagrégé chauffé de l'alimentation à une zone de travail.

7. Dispositif de commande de machine de fabrication additive qui comprend le support lisible par processeur de la revendication 5.

8. Procédé de fabrication additive, comprenant :

le fait de provoquer un écoulement de cataracte de matériau de construction en poudre à l'intérieur d'un récipient (212) ;
le chauffage de l'écoulement de cataracte de matériau de construction en poudre (214) ;
la distribuetion d'un matériau de construction en poudre chauffé du récipient vers une zone de travail (216) ; et
puis la fusion du matériau de construction en poudre dans la zone de travail (218) ;
où le récipient est un récipient cylindrique et la cause comporte la rotation du récipient.

9.  Procédé selon la revendication 8, dans lequel le récipient est un récipient allongé et la distribution comporte la distribution d'un matériau de construction en poudre chauffé à travers une fente longitudinale dans le récipient.

10. Procédé selon la revendication 9, comprenant la compression du matériau de construction dans la zone de travail avec le récipient.

11. Procédé selon la revendication 9, où l'opération consiste à faire rouler et/ou à faire glisser le récipient sur le matériau de construction dans la zone de travail.

12. Procédé selon la revendication 8, comprenant le piégeage de l'air dans le récipient et le chauffage comporte le chauffage de l'air piégé dans le récipient.

13. Procédé selon la revendication 8, dans lequel la fusion comporte la fusion d'un matériau de construction en poudre dans la zone de travail pour former une tranche et le processus comprend la répétition de la distribution et la fusion successive pour former plusieurs tranches.

FIG. 1

FIG. 2

**FIG. 3**

**FIG. 4**

FIG. 5

FIG. 6

FIG. 7

FIG. 8

FIG. 9

FIG. 10

**FIG. 11**

**FIG. 12**

FIG. 13

FIG. 14

FIG. 15

FIG. 16

FIG. 17

FIG. 18

FIG. 19

FIG. 20

FIG. 21

210

212 — CAUSE A CATARACTING FLOW OF POWDERED BUILD MATERIAL INSIDE A CONTAINER

214 — HEAT THE CATARACTING FLOW OF POWDERED BUILD MATERIAL

216 — DISPENSE HEATED POWDERED BUILD MATERIAL FROM THE CONTAINER TO A WORK AREA

218 — FUSE POWDERED BUILD MATERIAL IN THE WORK AREA

## FIG. 22

PROCESSOR READABLE MEDIUM

92 —

94 — DE-AGGLOMERATING INSTRUCTIONS

## FIG. 23

FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013167194 A
- WO 2004028769 A